Europäisches Patentamt

(19) **European Patent Office**

Office européen des brevets

(11) Numéro de publication: **0 062 295**
**B1**

(12) # FASCICULE DE BREVET EUROPEEN

(45) Date de publication du fascicule du brevet:
10.07.85

(51) Int. Cl.⁴: **H 04 Q 11/04**

(21) Numéro de dépôt: 82102709.1

(22) Date de dépôt: 31.03.82

(54) Réseau de connexion numérique.

(30) Priorité: 03.04.81 FR 8106810
03.04.81 FR 8106809

(43) Date de publication de la demande:
13.10.82 Bulletin 82/41

(45) Mention de la délivrance du brevet:
10.07.85 Bulletin 85/28

(84) Etats contractants désignés:
BE CH DE FR GB IT LI NL SE

(56) Documents cités:
FR - A - 2 364 584
US - A - 3 912 873
US - A - 4 064 369

INTERNATIONAL CONFERENCE ON
COMMUNICATIONS, vol. 2, 4-7 juin 1978, TORONTO
(CA), B.J. ECKHART et al.: "DMS-200 System
Evolution", pages 31.1.1-32.1.5
ELECTRICAL COMMUNICATION, vol. 54, no. 3, 1979,
LONDRES (GB), P.C. RICHARDS: "ITT 1240 Digital
exchange. Cost effective digital switching for up to
100.000 lines", pages 205-214
L'ONDE ELECTRIQUE, vol. 57, no. 10, octobre 1977,
PARIS (FR), F. TALLEGAS: "La commutation
électronique temporelle système E 10", pages 559-608

(73) Titulaire: **COMPAGNIE INDUSTRIELLE DES
TELECOMMUNICATIONS CIT-ALCATEL S.A. dite:,
12, rue de la Baume, F-75008 Paris (FR)**

(72) Inventeur: **Dupuis, Bernard, 13, allée J.B. Lulli,
F-78190 Montigny le Bretonneux (FR)**
Inventeur: **Pasquet, Jean-Pierre, 8, allée Berlioz,
F-95800 Villejuif (FR)**
Inventeur: **Coppens, Christian, 60, rue de Villacoublay,
F-78140 Velizy (FR)**

(74) Mandataire: **Weinmiller, Jürgen et al, Zeppelinstrasse 63,
D-8000 München 80 (DE)**

(56) Documents cités: (suite)
**THE POST OFFICE ELECTRICAL ENGINEERS
JOURNAL, vol. 73, avril 1980, LONDRES (GB), J.N.A.
RISBRIDGER: "System X: Subsystems. Part 1-The
digital switching subsystem", pages 19-26
INTERNATIONAL SWITCHING SYMPOSIUM, 21-25
septembre 1981, MONTREAL (CA), M. BALLARD et al.:
"The E 10.5-TSS.5 A multipurpose digital switching
system", session 14A, paper 1, pages 1-9**

## Description

L'invention concerne un réseau de connexion numérique pour central comportant un ensemble de commande à structure répartie. Elle est applicable dans les industries des télécommunications et de la télématique, en particulier dans les autocommutateurs téléphoniques temporels.

Depuis le dédut de la commutation temporelle ont été développés des commutateurs et des organisations de réseau de grande capacité. Un commutateur de base ayant par exemple une capacité de trente deux liaisons MIC est décrit dans le document FR-A-1 511 678.

Des réseaux de connexion à plusieurs étages sont décrits dans les documents FR-A-2 041 673, 2 106 651, 2 126 579 et plus récemment dans le document »Electrical Communication, vol 54, No 3, 1979 Londres (GB) de P. C. Richards »ITT 1240 Digital Exchange, Cost effective Digital Switching for up to 100 000 lines«, qui décrit un réseau temporel multi-plans, modulaire, à commande décentralisée au moyen de processeurs multiples. On a cherché également à améliorer la modularité, pour optimiser le matériel installé et faciliter les extensions, et la fiabilité, pour limiter les interventions urgentes. Ceci a été obtenu par les améliorations de structures internes, par exemple selon les documents FR-A-2 041 673 et 2 440 672 et par des améliorations d'organisation concernant les possibilités d'entraide ou de basculement sur des unités de secours avec une redondance du matériel aussi réduite que possible, par exemple selon le document FR-A-2 429 534.

D'autre part, la souplesse de la commutation numérique a entraîné une extension des fonctions du réseau de connexion. Ainsi des liaisons MIC vers des émetteurs/récepteurs de signalisation et des liaisons de commande entre unités de commande et unités terminales, — par exemple des unités comportant une logique de contrôle d'équipement téléphoniques, tels que signaleurs, positions d'opératrices, équipements d'alarmes ou de circuits —, sont maintenant reliées au réseau. On se rapportera par exemple aux documents FR-A-2 451 141 et 2 456 437.

Cette évolution, encore accrue par la prise en compte des nouveaux services de la télématique nécessite une amélioration de la modularité et de la fiabilité, et des possibilités de reconfiguration du réseau sans intervention manuelle, ainsi qu'un contrôle aussi exhaustif que possible avec peu de moyens spécifiques par rapport à ceux qu'exigeraient la mise en oeuvre des méthodes prévues pour les centraux à commande centralisée, tels que décrits notamment dans le document FR-A-2 467 523.

Le but de l'invention est donc de réaliser un réseau de connexion simple, modulaire, auto-contrôlé. La simplicité permet une redondance forte pour un surcoût faible, ce qui augmente la fiabilité du réseau et réduit les interventions urgentes aux cas très rares de pannes multiples sur tous les organes redondants.

Ce but est atteint selon l'invention par un réseau de connexion numérique comportant un ensemble de commande à structure répartie dans un autocommutateur à réseau de connexion central, divisé en plusieurs plans indépendants, auquel des unités de terminaux, réparties en groupes sont reliées par des liaisons multiplex, composées de liaisons entrantes et sortantes, qui desservent chacune en parallèle plusieurs unités de terminaux formant un groupe, chaque groupe étant relié par au moins une liaison à chaque plan du réseau central, caractérisé par le fait que chaque plan comporte des commutateurs synchronisés équipés chacun d'un marqueur et formant un seul étage de commutation, les commutateurs étant reliés en parallèle aux liaisons entrantes du plan, et desservant chacun un groupe de liaisons sortantes, chaque commutateur étant modulaire et comportant un circuit de mémoire de commande, piloté par le marqueur associé, et plusieurs circuits de mémoire tampon constituant des matrices de connexion carrées, respectivement reliées en entrée à une partie des liaisons entrances desservies par le commutateur, et en sortie à toutes les liaisons sortantes.

Un réseau selon le préambule de la revendication 1 est décrit dans le document cité »Electrical Communication«.

L'invention est précisée dans la description qui suit en liaison avec les figures répertoriées ci-dessous.

Fig. 1 un diagramme général d'un autocommutateur à réseau de connexion temporel,

Fig. 2 un diagramme d'une unité de terminaux d'abonnés,

Fig. 3 un diagramme général d'un plan du réseau de connexion selon l'invention,

Fig. 4 un schéma général d'un commutateur temporal d'un réseau de connexion selon l'invention,

Fig. 5 un diagramme faisant apparaître la modularité du réseau de connexion selon l'invention,

Fig. 6 (divisée en deux parties figure 6A et figure 6B raccordées au point S) et figure 7 des schémas des circuits de mémoire tampon, d'amplification de sortie de commande d'un commutateur selon la figure 4,

Fig. 8 un schéma d'un marqueur et d'un automate d'accès aux liaisons de commande.

Fig. 9 un diagramme de principe du contrôle de chemin.

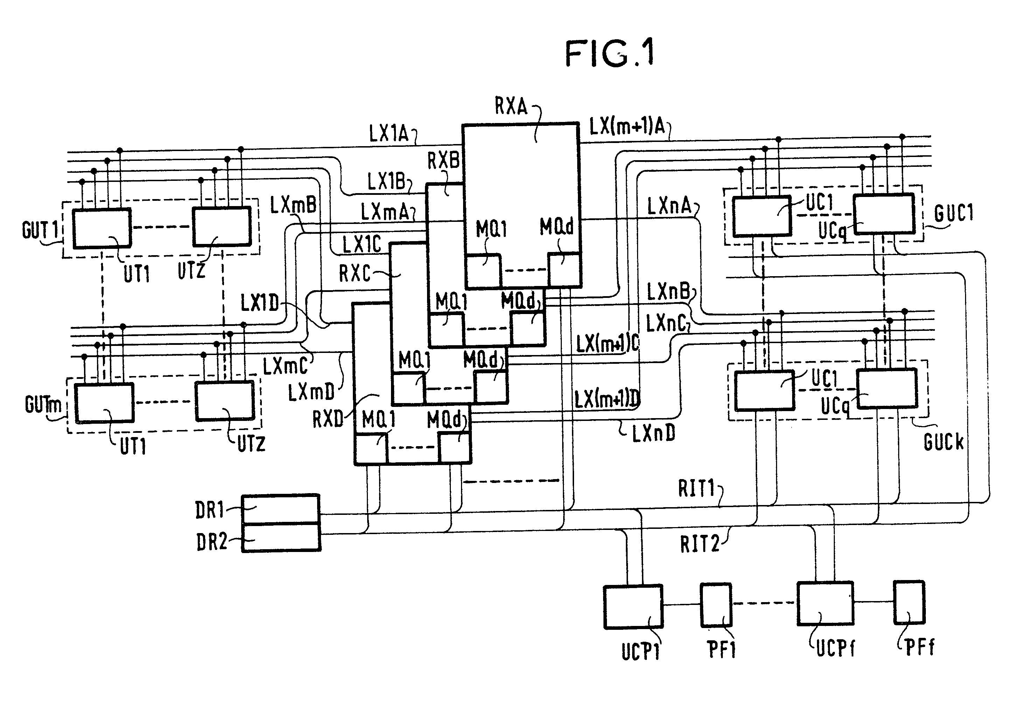

L'autocommutateur temporel représenté de manière simplifiée à la figure 1 et développé dans les demandes européennes 0 062 293 et 0 062 296 portant les mêmes dates de priorité et de dépôt que la présente demande, comporte:

— Des groupes d'unités de terminaux GuT1 à GuTm comportant des terminaux d'abonnés, des circuits analogiques et numériques, et des terminaux auxiliaires de signalisation, d'émission de tonalités et de films parlants, d'essais de lignes d'abonnées et de circuits, de circuits de conférence, etc . . . .

— Un réseau de connexion central à un seul étage de commutation, organisé en plans indépendants,
par exemple quatre plans RXA à RXD. Les chiffres donnés ici et dans la suite sont de simples
exemples destinés à préciser un mode de réalisation ou à simplifier la représentation.

— Un ensemble de commande à architecture répartie formé de groupes GUC1 à GUCk d'unités de
commandes UC identiques, par exemple des microprocesseurs. Les unités de commande proprement dites UC1 à UCq sont banalisées. L'ensemble de commande comporte également des unités
UCP1 à UCPf qui gèrent des groupes de périphériques PF1 à PFf. Ces unités peuvent être
identiques aux précédentes, mais elles ne sont pas banalisées complètement du fait de leur
liaisons physiques avec les périphériques.

Les liaisons qui interconnectent ces trois ensembles sont les suivantes:

— Les unités de terminaux UT (UT1 à UTz) sont reliées à chaque plan RXA à RXD du réseau de
connexion par une liaison multiplex LX telles, LX1A à LXmD, comportant 32 voies de 8 e. b., d'un
débit de 2 M e. b/s dans chaque sens de transmission. Les unités de terminaux UT d'un même
groupe sont reliées en parallèle aux mêmes liaisons multiplex LX.

— Les unités de commandes UC1 à UCq sont également reliées au réseau de connexion par des
liaisons multiplex LX(m + 1)A à LXnD, à raison d'une liaison par groupe GUC vers chaque plan.
Les messages échangés entre unités de commande et untiés de terminaux empruntent des voies
temporelles des liaisons LX, reliées par le réseau de connexion d'une manière semi-permanente
et reconfigurable. On réalise ainsi des canaux de transmission de données d'un débit de 64 k e. b/s
qui sont utilisés suivant une procédure dite HDLC définie par le CCITT norme ISO.

— Les unités de commande UC et UCP sont reliées entre elles par une liaison point à point doublée
pour des raisons de sécurité RIT1, RIT2. Il s'agit d'une liaison série utilisant également une
procédure HDLC. L'accès à la liaison est géré par un distributeur dupliqué DR1, DR2 qui délivre les
autorisations d'émission et supervise la durée d'utilisation.
La liaison comporte cinq paires de fils vers chaque station raccordée pour les fonctions d'appel,
d'autorisation, d'horloge, d'émission et de réception.

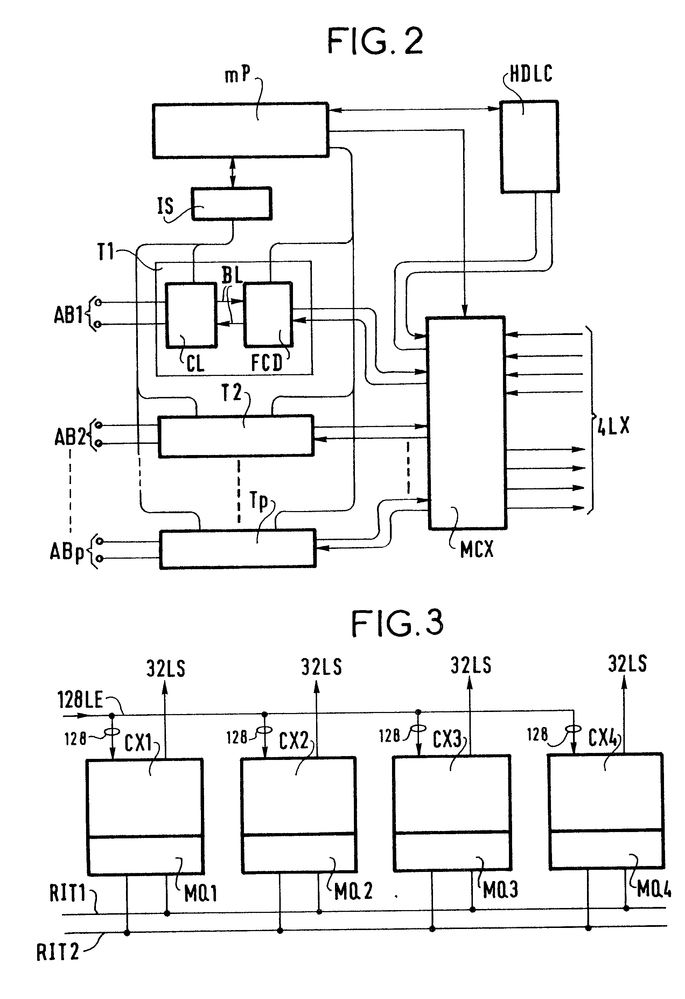

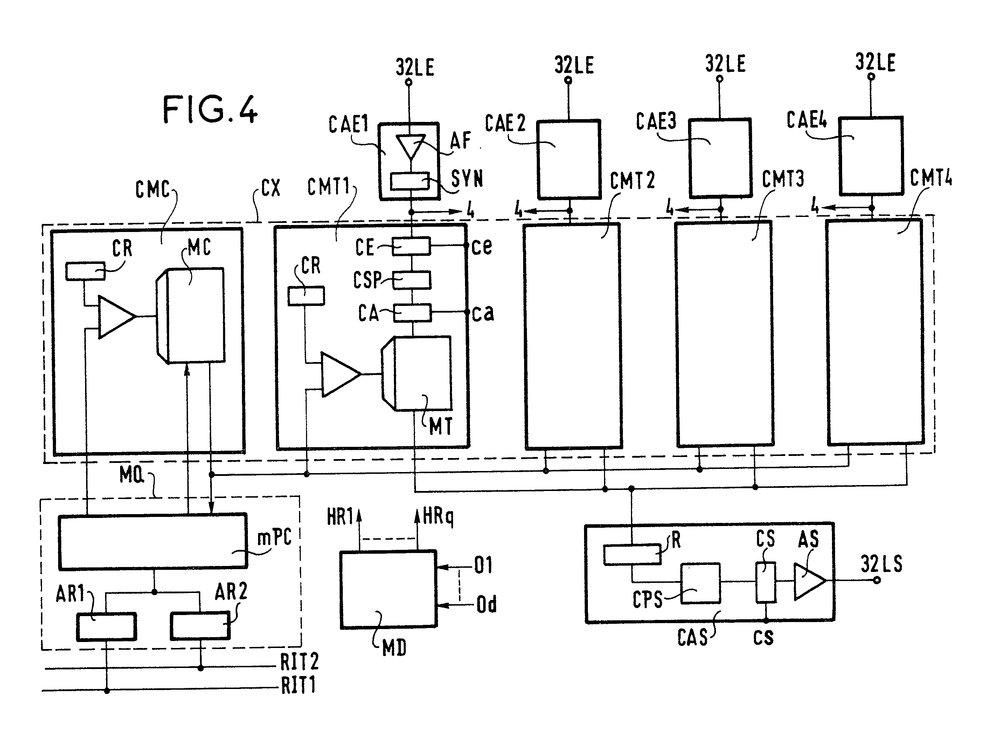

Les liaisons entre les unités de commande UC et les unités de terminaux UT sont réalisées dans le
réseau de connexion au moyen de connexions semi-permanentes établies entre les voies MIC.
Le réseau de connexion central RXA à RXD est commandé par des marqueurs MQ1 à MQd pilotés
par les unités de commande UC également par l'intermédiaire des liaisons RIT1, RIT2.
Toutes les unités citées plus haut UT, UC, UCP, MQ disposent d'un circuit d'émission/réception de
messages de type HDLC, par exemple d'un circuit de type MC 6854 de la société MOTOROLA ou 8273
de la société INTEL.
Pour les unités de terminaux UT il faut également disposer d'un étage de commutation dans chaque
unité pour permettre de connecter un terminal quelconque à une voie temporelle de l'une quelconque
des liaisons multiplex LX qui desservent cette unité. Un exemple d'unité de terminaux d'abonnés est
montré à la figure 2. Chaque terminal d'abonné T1 à Tp est formé d'un circuit de ligne CL, comportant
des moyens d'alimentation, de protection, de supervision de boucle et d'injection de sonnerie, et d'un
circuit FCD de filtrage et de codage analogique/digital de type Codec.
L'unité de terminaux UT est pilotée par un microprocesseur mP relié aux liaisons multiplex LX ici au
nombre de quatre par un circuit d'émission-réception HDLC. L'etage de commutation est dans cet
exemple une matrice d'aiguillage MCX de type spatial.
L'aiguillage temporel est réalisé au niveau des circuit de filtrage et de codage FCD par synchronisation sur la voie choisie, sous la commande du microprocesseur. Celui-ci pilote également les circuits
de ligne CL par l'intermédiaire d'une interface IS ded supervision et de commande.
Le réseau de connexion central est détaillé dans la figure 3. Il a un seul étage de commutation et est
organisé en quatre plans indépendants. Chaque plan du réseau de connexion a une capacité de 128
liaisons multiplex bidirectionnelles LX c'est-à-dire qu'il peut relier une voie quelconque de l'une des
128 liaisons entrantes LE à une voie quelconque de l'une des 128 liaisons sortantes LS.
Un plan du réseau de connexion comporte quatre commutateurs CX1 à CX4 équipés chacun d'un
marqueur MQ1 à MD4 et d'une capacité de 128 liaisons entrantes LE et de 32 liaisons sortantes LS. Les
liaisons LE sont donc multiplées sur les quatre commutateurs du plan.
La structure d'un commutateur CX est représentée à la figure 4. Les 128 lignes LE sont réparties sur
quatre circuits d'amplification d'entrée CAE1 à CAE4 comportant chacun 32 amplificateurs AF et un
circuit de syncronisation SYN. Les circuits d'amplification d'entrée CAE sont communs aux quatre
commutateurs CX d'un même plan et desservent chacun 32 des 128 liaisons LE aboutissant à ce plan.
Chaque circuit d'amplificateur d'entrée CAE est relié à un des circuits de mémoire tampon CMT1 à
CMT4, dans chaque commutateur CX, ces circuits constituant des matrices de connexion carrées et
comportant chacun successivement un circuit de contrôle d'entrée par prélèvement CE, un circuit de
conversion série-parallèle CSP, et un circuit d'accès CA à une mémoire tampon MT. Le circuit d'accès

3

# 0 062 295

CA permet également l'injection d'échantillons pour un contrôle dit »actif« du réseau de connexion.

La mémoire MT comporte 1024 mots de 8 e. b, soit un mot par voie des 32 lignes LE concernées, et le débit d'entrée-sortie de la mémoire est de 8MHz, c'est-à-dire un débit proche du maximum permis avec la technologie TTL utilisée.

L'adressage est de type »commande aval« c'est-à-dire qu'il est fourni en écriture par un compteur CR et en lecture par un circuit de commande CMC piloté par le marqueur MQ. La mémoire de commande MC fournit l'adresse de lecture des mémoires MT des quatre circuits de mémoire tampons CMT1 à CMT4, elle est elle-même adressée cycliquement en lecture et par le marqueur en écriture pour permettre l'inscription de chaque nouvelle connexion ou déconnexion.

Le marqueur MQ comporte un microprocesseur mPC qui est relié aux liaisons RIT1, RIT2 par des circuits d'accès AR1, AR2 décrits plus loin.

Les sorties des mémoires tampon MT des quatre circuits de mémoire tampon CMT1 à CMT4 d'un plan sont reliées en parallèle à un circuit d'amplification de sortie CAS comportant des registres tampons R, reliés à un circuit de conversion parallèle — série CPS lui-même relié à un circuit de prélèvement de sortie CS desservant un groupe de 32 amplificateurs AS reliés chacun à une liaison sortante LS différente.

L'ensemble des signaux d'horloge HR1 à HRq nécessaires au fonctionnement du commutateur est fourni par un module de distribution de signaux MD piloté par des oscillateurs O1 à Od non figurés de l'autocommutateur.

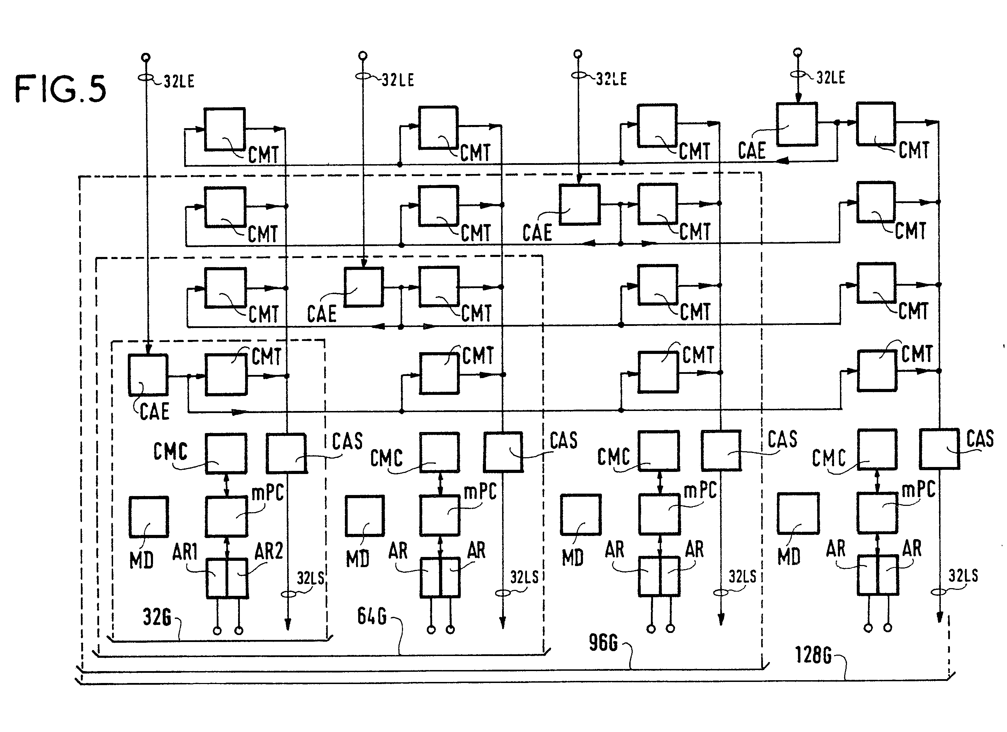

La modularité du réseau de connexion qui apparaît à la figure 5 est la suivante:

— jusqu'à 32 groupes G d'unités de terminaux GUT ou d'unités de commande GUC il suffit d'équiper un commutateur avec un seul circuit de mémoire tampon CMT.
die 33 à 64 groupes, il faut deux commutateurs équipés chacun de deux mémoires tampon,
de 65 à 96 groupes, il faut trois commutateurs avec chacun trois mémoires tampons,
de 97 à 128 groupes, il faut quatre commutateurs entièrement équipés.

La description qui suit concerne un mode de réalisation des principaux circuits constituant les commutateurs.

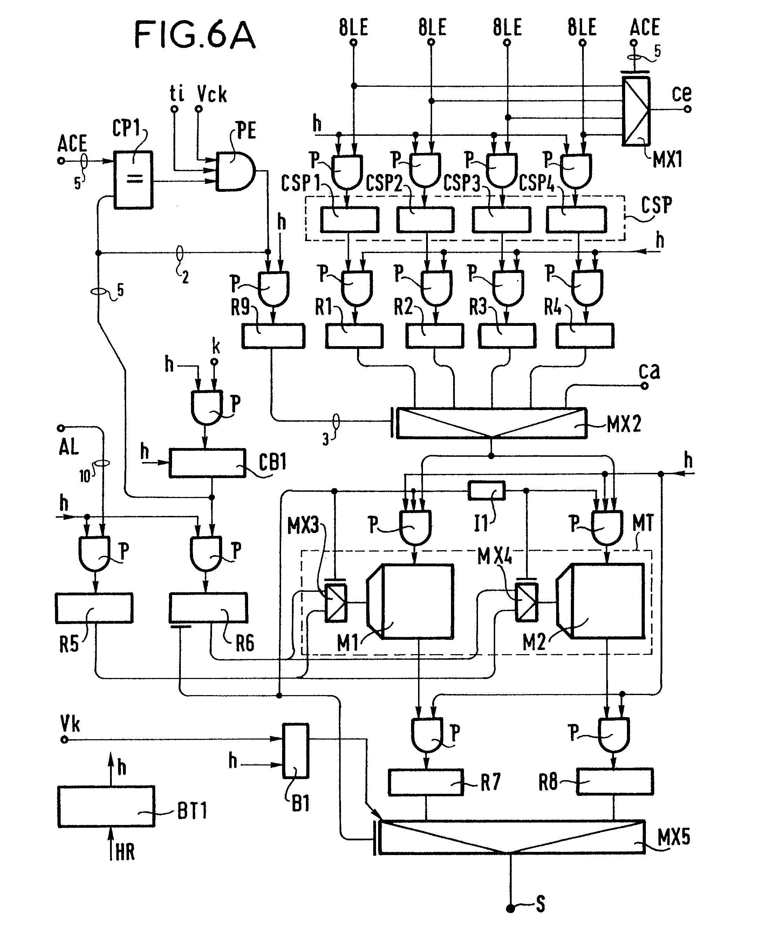

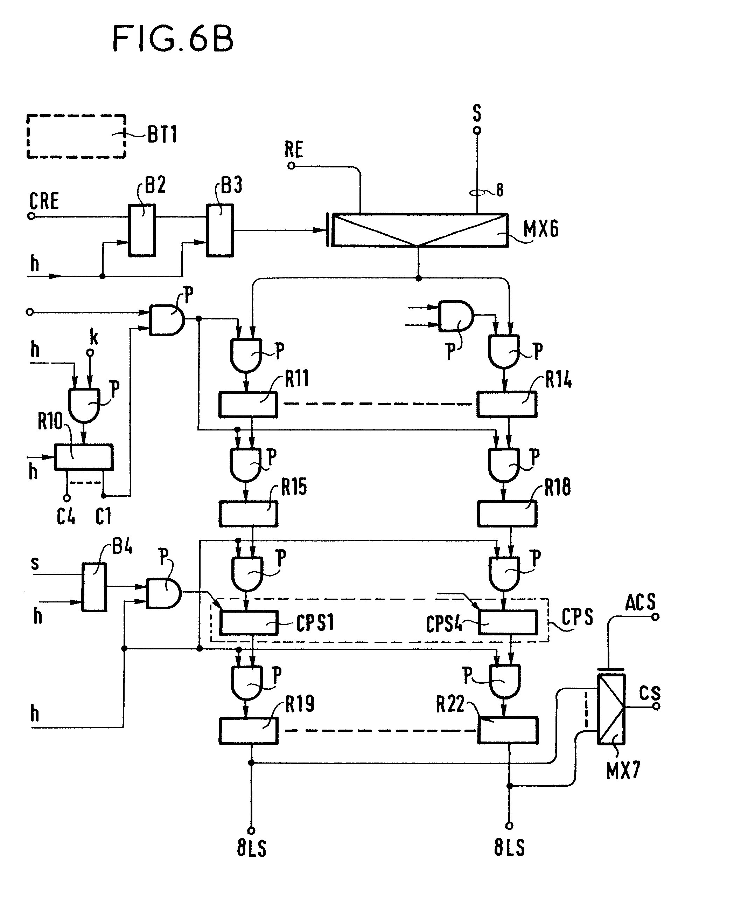

Les circuits de mémoire tampon CMT et d'amplification de sortie CAS sont représentés respectivement sur les figures 6A et 6B. Les signaux d'horloge et de synchronisation sont distribués par un circuit de base de temps BT1 qui est lui-même synchronisé avec le module de distribution de signaux MD du commutateur (figure 4). Le circuit BT1 délivre des signaux »h« qui ne seront pas décrits en détail car ils sont du domaine de l'art connu, et ils découlent du fonctionnement des circuits, tel qu'il est décrit plus loin.

Le prélèvement du signal »ce« sur les trente deux liaisons LE du commutateur temporal est réalisé au moyen d'un multiplexeur MX1 individuellement relié aux trente deux liaisons et l'adresse »ACE« de la liaison à contrôler est fournie par le circuit CMC de ce commutateur CX.

Le circuit de conversion CSP est formé de quatre circuits intégrés CSP1 à CSP4 de type »MICSPA« reliés chacun à huit des 32 liaisons entrantes du circuit de mémoire tampon CMT via autant de portes P. Les sorties des circuits CSP1 à CSP4 sont respectivement reliées à quatre registres R1 à R4. L'aiguillage des échantillons vers la mémoire tampon est effectué par un multiplexeur MX2, dont une entrée est affectée à l'injection d'un code de contrôle actif »Ca« marqué par exemple par câblage.

Des portes de type 'ET« globalement référencées P qui sont validées par la base de temps BT1 contrôlent l'entrée des registres du circuit de conversion CSP, de la mémoire tampon MT et en général tous les transferts. Ces portes ne seront plus mentionnées, par la suite, de manière à ne pas alourdir la description.

Pour permettre l'utilisation de la mémoire tampon MT à une vitesse maximale, celle-ci a été dédoublée en deux parties M1 et M2 utilisées simultanément l'une en lecture et l'autre en écriture. L'adressage lecture AL fourni par la mémoire de commande MC du commutateur CX est acheminé par un registre R5 et des multiplexeurs MX3 et MX4. L'adressage écriture, fourni par un compteur CB1 à fréquence de rotation de 8 MHz, est acheminé par un registre R6 et les mêmes multiplexeurs. Le compteur possède une capacité doublée (11 e. b au lieu de 10 pour adresser 1024 mots) pour permettre l'utilisation alternée des deux mémoires, l'élément binaire de poids faible contrôle directement le multiplexeur MX3 et l'entrée de la mémoire M1, et à travers un inverseur I1 le multiplexeur MX4 et la mémoire M2. Le compteur CB1 est synchronisé par la base de temps BT1 (chargement à une valeur K câblée).

La sortie des mémoires M1, M2 est aiguillée vers la sortie parallèle S (8 e. b) du circuit de mémoire tampon CMT par des registres R7, R8 et un multiplexeur MX5 adressé par l'élément binaire de poids faible du compteur CB1, et contrôlé par une bascule B1 qui reçoit le signal de validation Vk d'accès au circuit de sortie CAS associé à un commutateur CX. Le signal Vk (k = 1 à 4) est délivré par le circuit de commande CMC de ce commutateur et permet de sélectionner celui des circuits de mémoire CMT dont la mémoire tampon MT doit fournir l'échantillon acheminé à cet instant par le commutateur CX.

Pour l'injection du contrôle actif »Ca«, l'adresse de liaison entrante ACE fournie par le circuit de commande CMC est comparée par le comparateur CP1 aux 5 e. b. de poids fort du compteur CB1. Le

4

registre R9 d'adressage du multipleur MX2 reçoit deux éléments binaires de poids forts du compteur CB1 et un élément binaire fourni par une porte PE de type »ET« qui reçoit la sortie du comparateur CP1, un top d'injection »ti« fourni par le circuit de mémoire de commande CMC en synchronisation avec la voie concernée, et un signal de validation de circuit Vck (k = 1 à 4) fourni par ce même circuit CMC.

A l'entrée du circuit d'amplification de sortie CAS, un multiplexeur MX6 permet de recevoir soit la sortie S des 4 circuits de mémoire tampon CMT1 à CMT4 du commutateur, soit un code repos câble RE est systématiquement émis sur les liaisons LS non connectées. La commande CRE d'injection de ce code est émise par le circuit de commande CMC et transmise par des bascules de synchronisation B2, B3 à l'entrée d'adressage du multiplexeur MX6.

En sortie du multiplexeur MX6, les échantillons sont distribués successivement à quatre registres R11 à R14 sous le contrôle d'un registre à quatre positions R10 recevant des impulsions à la fréquence de 8 MHz et synchronisé avec les liaisons sortantes LS.

Les échantillons traversent enfin des registres intermédiaires R15 à R18, le circuit de conversion CPS, formé de quatre circuits CPS1 à CPS 4 de type MICSPA capables d'effectuer les conversions parallèle/série, et quatre registres tampons de sortie R19 à R22.

L'entrée des circuits CPS1 à CPS4 est validée par une bascule B4 activée en synchronisation avec chaque voie temporelle sortante.

Le prélèvement de contrôle de sortie CS est réalisé par un multiplexeur MX7 dont l'adresse ACS de 5 e. b est fournie par le circuit de commande CMC.

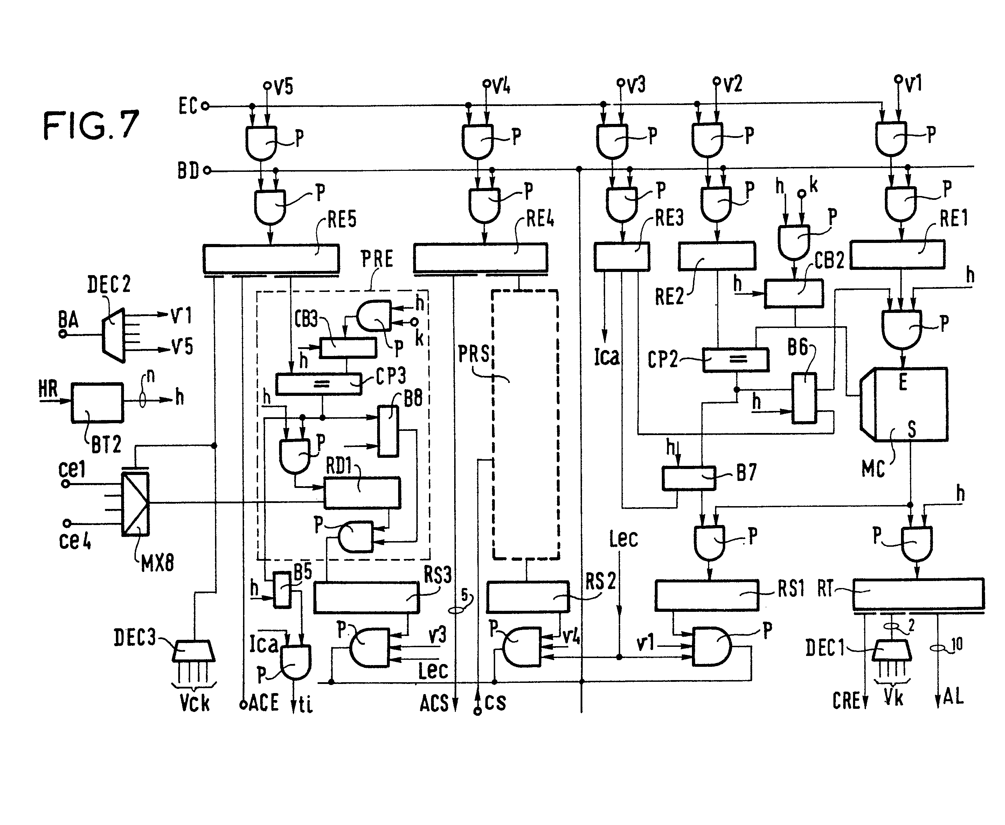

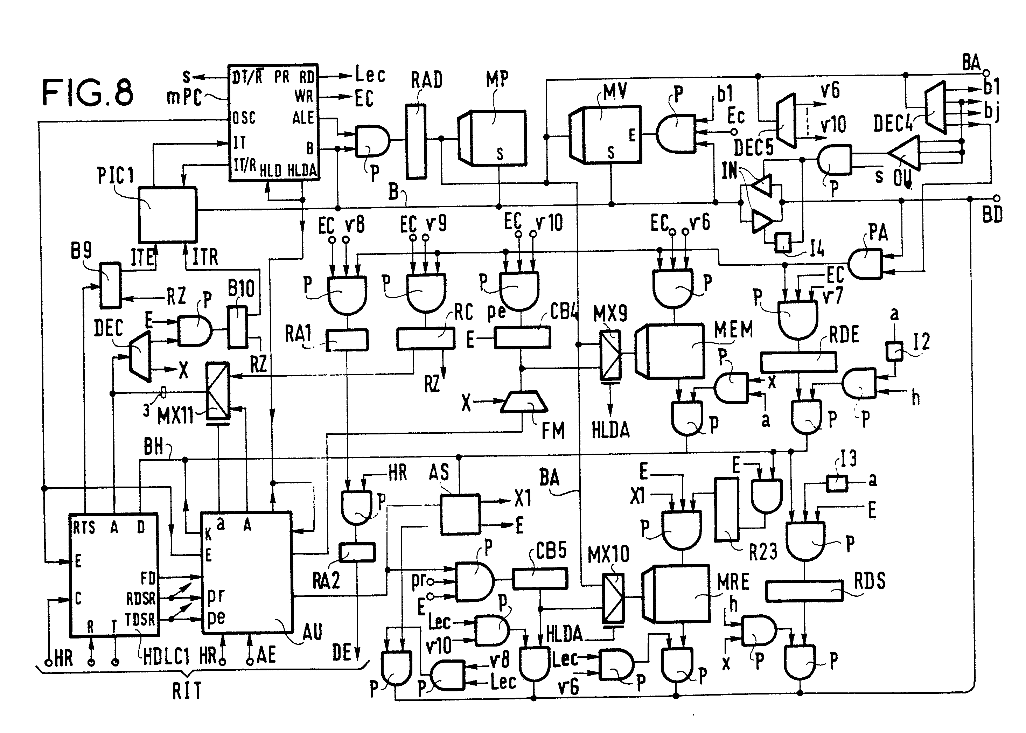

Le circuit de commande CMC est représenté figure 7. Ce circuit comporte essentiellement une mémoire de commande MC avec un registre tampon RT d'adressage des mémoires tampons, des circuits de commande de contrôle passif PRE, PRS et actif B5, et des registres d'entrée et de sortie RE1 à RE5, RS1 à RS3 reliés au bus de données BD du microprocesseur mPC du marqueur (voir aussi figure 8).

Ces circuits sont pilotés par un circuit de base de temps BT2 synchronisé avec le module MD de distribution de signaux du commutateur CX.

Les signaux de validation des transferts entre les registres et le bus BD sont fournis par décodage de 3 e. b. du bus d'adressage BA du microprocesseur mPC par le décodeur DEC2 qui fournit les signaux v1 à v5 et par les fils de commande d'écriture EC et de lecture Lec issus de ce même microprocesseur.

La mémoire de commande MC comporte 1024 mots de 13 e. b. permettant la commande des 32 × 32 voies portées par les 32 liaisons LS: 10 e. b. sont utilisés en sortie du registre RT pour l'adresse AL des mémoires tampons, 2 e. b. sont utilisés pour la validation Vk d'un circuit de mémoire tampon CMT par un décodeur DEC1 et un e. b. pour la commande CRE d'injektion du code repos.

La description qui suit précise les fonctions réalisées sur ordre du microprocesseur, et le principe de réalisation des circuits.

L'écriture en mémoire MC s'effectue par:

— chargement du registre RE1 (commandes v1 et Ec),
— chargement du registre RE2 qui contient l'adresse du mot à écrire-(commandes v2 et Ec),
— écriture: la mémoire est adressée par le compteur CB2, et un comparateur CP2 active une bascule B6 qui autorise l'écriture lorsque le compteur atteint la valeur inscrite dans le registre RE2.

La lecture de la mémoire MC par le marqueur permettant le test du circuit CMC par comparaison avec une image de la mémoire MC inscrite en mémoire du marqueur, s'effectue par:

— chargement de l'adresse (commandes v2 et Ec),
— lecture de la mémoire de chargement du registre RS1, validé par le comparateur CP2 et une bascule B7,
— transfert du contenu du registre RS1 sur le bus BD (v1 et Lec)

Le prélèvement en entrée s'effectue par:

— chargement d'une adresse de 12 e. b. dans le registre RE5 (commandes v5 et Ec),
    — 2 e. b. adressent un multiplexeur MX8 recevent les échantillons des circuits CMT (Ce1 à Ce4),
    — 5 e. b. fournissent l'adresse ACE, c'est-à-dire le numéro de liaison LE,
    5 e. b. fournissent l'adresse de voie; la synchronisation sur la voie à contrôler est réalisée dans le circuit PRE par comparaison par le comparateur CP3 de l'adresse avec le contenu d'un compteur CB3 synchronisé par la base de temps. L'échantillon est chargé au rythme de la liaison LE, soit 2 MHz, dans un registre à décalage RD1. Le transfert dans le registre de sortie RS3 est piloté par une bascule B8 activée en fin d'echantillon.

Le prélèvement en sortie s'effectue selon un principe identique, utilisant les registres RE4 et RS2 et un circuit PRS analogue à PRE.

Le contrôle actif s'effectue par:

— chargement du registre RE5, le signal de validation de circuit VCk est fourni par décodage par le décodeur DEC3 des 2 e. b. d'adresse de circuit CMT,

— chargement du registre RE3. Ce registre est un registre de commande qui fournit la commande d'injection »Ica« du code »Ca«, des commandes de validation, de lecture et d'écriture mémoire par les bascules B6, B7 et des commandes de remise à zéro. Une bascule B5 validée par le signal de sortie du comparateur CP3 délivre un top »ti« lorsque le signal »Ica« est fourni.

Le marqueur MQ1 et l'accès aux liaisons point à point RIT sont représentés sur la figure 8.

Le marqueur MQ1 comporte un microprocesseur mPC; par exemple un circuit 8086 associé à un circuit d'horloge 8284 fabriqués par la société INTEL. Un bus interne B alimente le bus d'adresse BA par un registre d'adresse RAD, et un bus de données BD à travers une interface directionelle IN contrôlée par le microprocesseur mPC (signal directionnel »s« issu de la sortie DT/R du microprocesseur, et adresse d'entrée-sortie reçues par une porte »OU« et un décodeur DEC4).

Le microprocesseur mPC est associé à une mémoire programme MP, par exemple de type »reprom« et une mémoire vive données MV.

L'organe d'accès aux liaisons RIT comporte un circuit HDLC1 de gestion des échanges en procédure HDLC, un automate de pilotage AU et des mémoires tampons intermédiaires d'émission MEM et de réception MRE.

Le circuit HDLC est par exemple de type 6854 fabriqué par la société MOTOROLA.

L'automate AU est formé de manière connue par une logique en mèmoire morte associée à un registre d'adresse qui reçoit les informations d'entrée, et à un registre de sortie, les deux registres étant pilotés par des signaux d'horloge fournis à l'entrée E par la sortie OSC du microprocesseur qui pilote également le circuit HDLC1. En entrée de l'organe d'accès, le bus BD est validé par une porte d'accès PA contrôlée par une adress »bj« issue du décodeur DEC4.

Les accès sont analogues à ceux que l'on a décrit pour le circuit de mémoire de commande CMC:

— utilisation des commandes WR et RD (fils EC et Lec) du microprocesseur, et d'un signal de sélection (v6 à v10) obtenu par décodage d'adresse par le décodeur DEC5;

— adressage multiplexé des mémoires MEM et MRE par le microprocesseur via le bus BA, par l'automate AU via les compteurs CB4, CB5, et les multiplexeurs MX9 et MX10 suivant le fonctionnement décrit plus loin.

— utilisation des circuits complémentaires suivants:
    — registre de données entrantes RDE connecté entre la porte PA et le bus BH du circuit HDLC1,
    — registre de données sortantes RDS entre les bus BH et BD,
    — registre tampon d'entrée R23 de la mémoire MRE,
    — registre de commande RC contenant des commandes de remises à zéro RZ des registres internes du circuit HDLC1 (entrée A correspondant au commandes R/W, RSO, RS1 du circuit 6854) fournies par l'intermédiaire d'un multiplexeur MX11 piloté par la sortie a de l'automate AU, le circuit HDLC1 peut ainsi être piloté soit par le microprocesseur, soit par l'automate;
    — registres d'appel RA1, RA2 pour avoir accès à la liaison RIT, le microprocesseur charge le registre RA1, les signaux d'horloge HR de la liaison RIT assurent le transfert de l'informtion dans le registre RA2 et le marquage du fil DE, l'autorisation d'émission en retour AE est reçue par l'automate AU;
    — circuit de reconnaissance d'adresse d'unité de commande AS, cette adresse qui sert à identifier les unités de commande reliées aux liaisons RIT, est câblée dans ce circuit, elle est comparée, en réception, à l'adresse interne dans les messages, en émission, elle est intégrée au message;
    — un circuit programmable PIC de gestion des interruptions du microprocesseur permet de prendre en compte les demandes de service de l'automate en émission et en réception. On utilise par exemple le circuit 8259 fabriqué par la société INTEL. En émission un signal d'interruption ITE est fourni directement par la sortie RTS du circuit HDLC1 via une bascale B9. En réception un signal d'interruption ITR est fourni par l'automate AU qui active une bascale B10. Ces bascules sont remises à zéro le signal RZ fourni par le microprocesseur via le registre RC.

Le fonctionnement des circuits est le suivant:
En cas de demande d'émission par le microprocesseur mPC:

— cargement de la mémoire MEM par le microprocesseur mPC, la mémoire peut contenir un message complet de n octets, d'adresse du dernier octet est chargée dans le compteur CB4,

— la mémoire est lue par le circuit HDLC1 sous contrôle de l'automate,

— le compteur CB4 est activé en mode dégressif sous le contrôle du signal prêt à émettre »pe« fourni par le circuit HDLC1 indiquant que son registre d'émission est vide,

— l'accès au bus BH en sortie de la mémoire est validé par l'automate dont les sorties a et A fournissant un code X de commande d'écriture du registre d'émission du circuit HDLC1,

**0 062 295**

— lorsque le compteur est revenu à zéro, un décodeur de fin de message FM avertit l'automate, et celui-ci pilote le circuit HDLC1 pour l'émission des codes de fin de message.

En cas de réception de messages sur la liaisons RIT, la détection d'un début de message marque la sortie FD du circuit HDLC1 et prévient l'automate, celui-di ordonne la lecture du registre de réception du circuit HDLC1, et le circuit AS reconnait d'adresse de marqueur.

Pour chaque octet reçu, le circuit HDLC1 active sa sortie RDSR qui fournet un signal prêt à recevoir »pr«. Le signal »pr« valide l'entrée d'horloge du compteur CB5. L'automate commande la lecture du registre de réception du circuit HDLC1 et l'écriture de la mémoire MRE par un signal X1. L'automate fait appel au microprocesseur mPC. Plusieurs messages peuvent être mis en file d'attente dans la mémoire MRE.

Le microprocesseur vient lire le compteur CB5 et chacun des messages contenus dans la mémoire.

Chaque message donne lieu en retour à un message d'acquittement.

Les fonctions réalisées par le marqueur sont essentiellement des fonctions de connexion, de déconnexion et de contrôle.

Le marqueur exécute des ordres fournis par l'unité de commande UC à laquelle il est affecté. Certains ordres donnent lieu à un message de compte-rendu.

Les fonctions de connexion donnent lieu à l'établissement d'une connexion à sens unique, c'est-à-dire entre une voie d'une entrée LE et une voie d'une sortie LS. Chaque connexion peut être associetée à trois sortes de contrôle, un contrôle actif de la connexion (élement binaire C du message), un test de repos de la liaison LS avant connexion (élément binaire R), un test de conformité de la connexion préexistante (élément binaire T).

La partie information du message comporte 7 octets:

— 1 octet de fonction 0 0 0 0 1 T R C,
— 3 adresses de 2 octets (adresse d'entrée, adresse de sortie, ancienne adresse d'entrée pour test de conformité).

Les fonctions de déconnexion sont la déconnexion simple, avec ou sans test de conformité et la déconnexion globale de plusieurs voies d'une même liaison sortante LS.

Le message comporte 6 octets:

— code de fonction (1 octet),
— adresse de la liaison LS concernée (1 octet),
— 32 e. b. affectés chacun à l'une des 32 voies, indiquant les voies à déconnecter.

Les contrôles comprennent un contrôle actif, un contrôle passif, un contrôle par relecture d'une connexion dans la mémoire de commande MC.

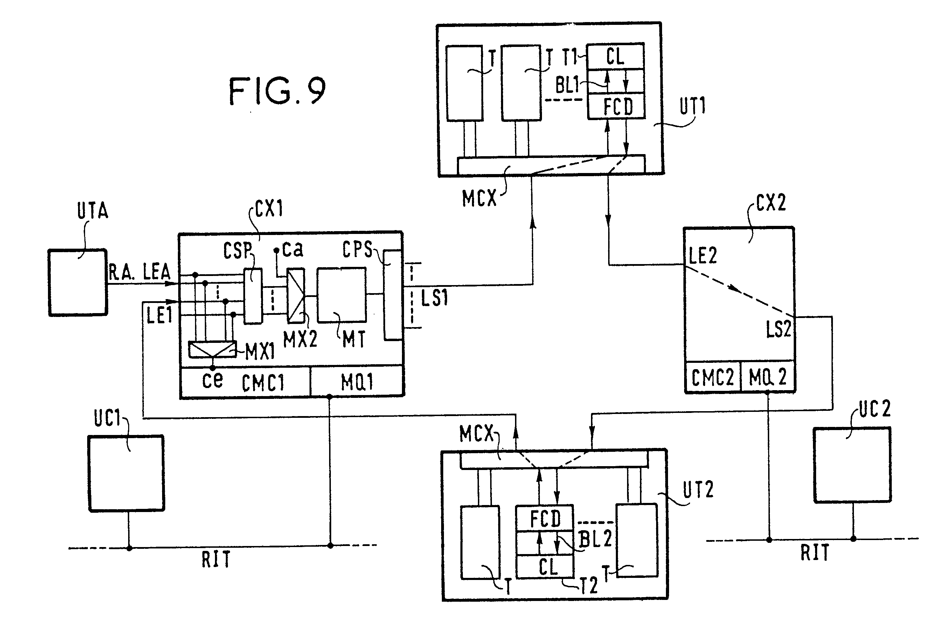

Les moyens décrits permettent un contrôle complet des liaisons établies à travers le réseau, par exemple des chemins de conversation depuis le terminal du demandeur jusqu'à celui du demandé. La solution retenue pour ce contrôle consiste à injecter le code de contrôle actif au niveau d'un marqueur et à recueillir ce code à l'entrée de ce marqueur après un parcours empruntant les voies de conversation aller et retour et les deux terminaux (figure 9).

Pour cela il faut boucler les voies entrantes et sortantes dans les terminaux, par exemple en amont du réseau de connexion ou en amont du circuit FCD, cette dernière solution aussi un contrôle du fonctionnement de ce circuit.

On va décrire les échanges de messages au cours de ce contrôle dans les conditions suivantes:

— le contrôle est effectué au décrochage du demandé,
— l'unité de terminaux du demandeur UT1 et celle du demandé UT2 sont gérées par des unités de commande distinctes UC1, UC2,
— le commutateur CX1 qui établit le chemin dans le sens unité UT2 vers unité UT1 est le même que celui qui a établi la liaison entre l'unité de terminaux auxiliaire UTA qui fournit le retour d'appel au demandeur, et l'unité UT1,
— le commutateur CX2, qui établit le chemin dans le sens UT1 vers UT2, est dans le même plan que le commutateur CX1,
— le choix et l'établissement du chemin sont réalisés par dialogue entre les untiés UC1 et UC2, qui pilotent respectivement les marqueurs MQ1 et MQ2 des commutateurs.

Les actions et messages sont les suivants:

Avant décrochage du demandé, celui-ci reçoit la sonnerie et le demandeur, relié à l'unité UTA, reçoit le retour d'appel R. A.

— au décrochage, l'unité UT2 coupe la sonnerie et avertit l'unité UC2, qui avertit l'unité UC1,
— l'unité UC1 commande à l'unité UT1 le bouclage BL1 du terminal du demandeur T1

7

—  l'unité UC1 commande au marqueur MQ1 de remplacer la connexion LEA—LS1 par la connexion LE1—LS1 avex contrôle actif,

—  l'unité UC2 commande à l'unité UT2 le bouclage LB2 du terminal du demandé T2,

—  l'unité UC2 commande au marqueur MQ2 d'établir la connexion LE2—LS2

—  le marqueur MQ1 effectue le contrôle actif avec prélèvement »ce« sur l'entrée LE1 et rend compte à l'unité UC1.

Ensuite les terminaux sont débouclés, et l'unité UC1 effectue le passage en phase de conversation avec déclenchement de la taxation.

Le contrôle par comparaison des codes émis »ca« et reçus »ce« peut être fait avec une tolérance déterminée, par exemple sans tenir compte de l'élément binaire de poids faible.

On va maintenant décrire à titre d'exemple le déroulement d'une communication locale en suivant les différentes phases de la communication: présélection, numérotation et traduction dans le cas d'un abonné à cadran et dans le cas d'un abonné à clavier, sélection locale, fin de sélection, connexion avec contrôle du chemin établi, libération.

On suppose que le demandé est libre, que le demandeur raccroche le premier, et que les terminaux du demandeur et du damandé sont gérés par des unités de commande distinctes UC1 et UC2. Les indices 1 sont donnés aux organes concernés par le demandeur et les indices 2 à ceux concernés par le demandé.

A.  Présélection, numérotation et traduction dans le cas d'un abonné à cadran:

Phase 1: le processeur de l'unité de terminaux UT1 explore cycliquement ses terminaux et détecte un décrochage.

Phase 2: L'unité UT1 avertit l'unité de commande UC1 et lui indique le numéro NT du terminal T1 de l'abonné demandeur.

Phase 3: L'unité de commande UC1 recherche une voie V1 entre le terminal T1 et le réseau de connexion RX et une voie d'accès V1A à l'unité de terminaux émetteurs de tonalités UTton.

Phase 4: L'unité de commande UC1 avertit le marqueur correspondant MQ1 du réseau de connexion en lui indiquant les vioies à relier.

Phase 5: L'unité de commande UC1 prévient l'unité de terminaux UT1 que la connexion du terminal T1 à l'unité de terminaux UTton est en cours.

Phase 6: L'unité de terminaux UT1 connecte localement le terminal T1 à la voie V1 d'un plan RXA du réseau de connexion.

Phase 7 — le terminal du demandeur T1 reçoit l'invitation à numéroter IA de l'unité UTton.

Phase 8 — le terminal T1 envoie le premier chiffre Ch1 à l'unité UT1,

Phase 9 — dès réception de la première impulsion l'unité UT1 coupe la connexion du terminal T1 à la voie V1 pour supprimer la tonalité,

Phase 10 — l'unité UT1 reçoit, identifie et transmet chaque chiffre CH2 à Chn à l'unité UC1

Phase 11 — après réception de deux chiffres l'unité UC1 effectue une première traduction pour pré-analyse d'acheminement

Phase 12 — traduction complète après réception du nombre de chiffres attendu, déterminé par la pré-analyse. A cette phase suivant le type de central et la nature de l'appel; l'unité de commande UC1 peut appeler un service de traduction centralisé implanté sur une autre unité de commande.

B.  Présélection, numérotation et traduction dans le cas d'un abonné à clavier en code multifréquence; ce cas met en outre en jeu une unité de terminaux récepteurs de numérotation en code clavier UTaux et un marqueur MQaux du commutateur qui relie les unités UT1 et UTaux pour la numérotation au moyen d'une boucle à deux voies différentes et deux commutateurs CX1 et CXaux situés dans un même plan du réseau de connexion

Phases 1 et 2 — sont identiques aux phases 1 et 2 du cas précédent,

Phase 3 — l'unité UC1 recherche une voie V1 vers UT1 et une voie Vaux vers un récepteur de numérotation disponible.

Phase 4 — ordres aux marqueurs MQ1 et MQaux d'établir les connexions dans les deux sens entre les unités UT1 et UTaux.

Phase 5 — l'unité de commande UC1 avertit UT1 qu'un récepteur de numérotation est connecté, Phases 6 et 7 sont identiques aux phases 6 et 7 du cas précédent (la tonalité est émise par UTaux) Phase 8 — le terminal T1 envoie le premier chiffre à l'unité UTaux

Phase 9 — l'unité UTaux coupe la tonalité d'invitation à numéroter IA

Phase 10—11 et 12 — sont identiques aux phases 10, 11 et 12 du cas précédent

Phase 13 l'unité de commande UC1 envoie un ordre de libération à l'unité UTaux

Phase 14 — l'unité de commande UC1 ordonne à MQaux de déconnecter la voie vers UTaux

Phase 15 — l'unité de commande UC1 ordonne à UT1 la déconnexion locale du terminal

C. sélection locale

Phase 1 — Apple de l'unité de commande UC2, qui gère le terminal du demandé T2, par l'unité de commande UC1 indiquant le plan RXA du réseau de connexion utilisé, la voie V1 qui relie le demandeur et le numéro NT2 du terminal T2 demandé.

Phase 2 — l'unité de commande UC2 recerche l'état du demandé: libre, occupé, transféré ou autre. S'il est libre, l'unité recherche une voie V2 vers le terminal T2 dans le plan du réseau de connexion

Phase 3 — on suppose que le terminal T2 est libre mais qu'il n'y a pas de voie dans le plan RXA (par exemple parce que la liaison correspondante est hors service) l'unité UC2 répond à l'unité UC1 Phase 4 — l'unité de commande UC1 cherche une voie V1 dans un autre plan RXB du réseau de connexion

Phase 5 — l'unité de commande UC1 avertit l'unité UC2 du numéro de plan et de voie à utiliser Phase 6 — recherche de voie par l'unité UC2

Phase 7 — ordre de l'unité UC2 à l'unité UT2 de prise du terminal T2, et sonnerie de T2

Phase 8 — réponse à la phase 5 de l'unité UC2 à l'unité UC1: fin de sélection

D. Fin de sélection

Phases 1 et 2 — fin de sélection l'unité de commande UC1 procède à la sauvegarde des informations concernat la communication (message vers une machine de sauvegarde), puis à la recherche d'une voie VRA de connexion d'une unité de tonalité (UTton) à l'unité UT1 pour connexion du signal de retour d'appel vers le demandeur

Phase 3 — ordre de l'unité UC1 au marqueur MQ1 de connecter les voies V1 et VRA

Phase 4 — ordre de l'unité de commande UC1 à l'unité UT1 de connecter localement T1 à la voie V1

Phase 5 — décrochage de T2 signalé par l'unité UT2 à l'unité UC2 puis à l'unité UC1 et arrêt de la sonnerie du demandé

E. Connexion avec contrôle du chemin établi

Phase 1 — ordre de l'unité de commande UC2 à l'unité de terminaux UT2 de bouclage du circuit FCD du terminal T2

Phase 2 — ordre du marqueur MQ2 de connecter la voie V2 (liaison LF2) — LS2 pour tester la liaison (figure 8)

Phase 3 — ordre de l'unité de commande UC1 à l'unité UT1 de bouclage du circuit FCD du terminal T1

Phase 4 — ordre de l'unité de commande UC1 au marqueur MQ1 de connexion avec test Phase 5 — compte rendu du test du marqueur MQ1 à l'unité de commande UC1

Phase 6 — ordre par les unités UC1 et UC2 de déboucler les circuits FCD

Phase 7 — établissement par l'unité UC1 de la taxation et début de la conversation

F. Libération

Phase 1 — raccrochage du demandeur détecté par exploration par l'unité UT1 puis l'unité UC1

Phase 2 — l'unité de commande UC1 émet la taxe et avertit la machine qui gère la sauvegarde

Phase 3 — l'unité de commande UC1 demande à l'unité de commande UC2 de libérer la partie de chaine qui la concerne

Phase 4 — ordre de libération de l'unité de commande UC1 à l'unité UT1 (déconnexion locale de T1)

Phase 5 — ordre de l'unité UC1 de couper la connexion (RXB, V'1, V'2)

Phase 6 — l'unité de commande UC2 recherche une voie VOCC pour connecter le terminal T2 à une unité UTton qui émet le signal d'occupation

Phase 7 — ordre de l'unité UC2 au marqueur MQ2 de connecter V'2 à VOCC

Phase 8 et 9 — le terminal reçoit la tonalité d'occupation et raccroche

Phase 10 — ordre de l'unité UC2 à l'unité UT2 de libérer T2 (déconnexion locale)

Phase 11 — ordre de l'unité UC2 au marqueur MQ2 de déconnecter la liaison V'2—VOCC.

**Revendications**

1. Réseau de connexion numérique comportant un ensemble de commande à structure répartie dans un autocommutateur à réseau de connexion central, divisé en plusieurs plans indépendants (RX), auquel des unités de terminaux (UT), réparties en groupes (GUT) sont reliées par des liaisons multiplex (LX), composées de liaisons entrantes (LE) et sortantes (LS), qui desservent chacune en parallèle plusieurs unités de terminaux (UT) formant un groupe (GUT), chaque groupe (GUT) étant relié par au moins une liaison (LX) à chaque plan (RX) du réseau central, caractérisé par le fait que chaque plan comporte des commutateurs synchronisés (CX) équipés chacun d'un marqueur (MQ) et formant un seul étage de commutation, les commutateurs étant reliés en parallèle aux liaisons entrantes (LE) du plan, et desservant chacun un groupe de liaisons sortantes (LS), chaque commutateur étant modulaire et comportant un circuit de mémoire de commande (CMC), piloté par le marqueur (MQ) associé, et plusieurs circuits de mémoire tampon (CMT) constituant des matrices de connexion carrées, respectivement reliées en entrée à une partie des liaisons entrantes (LE) desservies par le commutateur, et en sortie à toutes les liaisons sortantes (LS).

2. Réseau de connexion suivant la revendication 1, caractérisé par le fait que le circuit de mémoire tampon (CMT) comporte un groupe de circuits de conversion série/parallèle (CSP) desservant chacun une partie des liaisons entrantes (LE), suivis d'un circuit de multiplexage (MX2) donnant accès à une mémoire tampon (MT), et qu'il comporte un dispositif de démultiplexage à registres (R11 à R14) répartissant les échantillons en sortie de mémoire (MT) sur les entrées d'un groupe de circuits de connexion parallèle/série (CPS) donnant accès aux liaisons sortantes (LS).

3. Réseau de connexion suivant la revendication 2, caractérisé par le fait que la mémoire tampon (MT) est dédoublée en deux mémoires (M1, M2) ayant les mêmes circuits d'adressage en lecture et les mêmes circuits d'adressage en écriture, et étant utilisées simultanément l'une en écriture et l'autre en lecture alternativement.

4. Réseau de connexion suivant la revendication 1 dans lequel chaque marqueur (MQ) comporte un microprocesseur (mPC), caractérisé par le fait que le circuit de mémoire de commande (CMC) comporte une mémoire (MC) d'adressage des mémoires tampons (M1, M2) du commutateur, des registres d'entrée (RE1 à RE5) et de sortie (RS1 à RS3) donnant accès au bus de données (BD) du microprocesseur, ces registres étant sélectionnés par des signaux de validation (v1 à v5) obtenus par décodage des signaux émis par le microprocesseur mPC sur un bus d'adresse (BA).

5. Réseau de connexion selon la revendication 1, caractérisé par le fait qu'il comporte, dans chaque commutateur (CX) des moyens de prélèvement d'échantillons (MX, PRE, PRS) sur les liaisons multiplex entrantes (LE) et sortantes (LS) et des moyens d'injektion d'échantillons (CP1) de code de contrôle actif (ca) et par le fait que, pour le contrôle du bon établissement d'un trajet de connexion bidirectionnel entre un terminal demandeur (T1) et un terminal demandé (T2), il comporte en association les moyens suivants:

— lesdits moyens de prélèvement et d'injektion (MX, PRE, PRS, CP1),
— des moyens de bouclage (BL1, BL2) des trajets de réception et d'émission dans chacun desdits terminaux (T1, T2),
— des moyens de comparaison d'un échantillon injecté dans un commutateur (CX1) et du même échantillon prélevé à l'entrée du même commutateur (CX1) après le parcours complet du trajet de connexion bouclé au niveau des terminaux.

6. Réseau de connexion suivant la revendication 1, dans lequel les unités de terminaux (UT) sont organisées en groupes (GUT) affectés chagun à une unité de commande qui gère le groupe et les liaisons qui le relient au réseau de connexion central, l'établissement d'une communication entre deux terminaux (T1, T2) étant effectué par dialogue entre les unités de terminaux (UT1, UT2), les unités de commandes (UC1, UC2) qui gèrent ces unités de terminaux et les marqueurs (MQ1, MQ2) des commutateurs (CX1, CX2) choisis par les unités de commande pour l'établissenment des liaisons de conversation entre les deux terminaux, caractérisé par le fait que le bouclage des liaisons et le test sont réalisés par échange de message sur des liaisons entre une première unité de commande (UC1) et l'unité de terminaux du demandeur (UT1), entre ladite première unité de commande (UC1) et un marqueur (MQ1) d'un premier commutateur (CX1), entre une deuxième unité de commande (UC2) et l'unité de terminaux du demandé (UT2), entre ladite deuxième unité de commande (UC2) et un marqueur (MQ2) d'un deuxième commutateur (CX2) et entre lesdites unités de commande (UC1, UC2).

**Patentansprüche**

1. Digitales Koppelfeld mit einem Steueraufbau nach Art einer verteilten Struktur für eine Selbstwählanlage mit zentralem Koppelfeld, das in mehrere unabhängige Ebenen (RX) aufgeteilt ist und mit dem Endschaltungseinheiten (UT) in Gruppen (GUT) gegliedert über Multiplexverbindungen (LX) verbunden sind, wobei diese Verbindungen aus ankommenden (LE) und abgehenden Verbindungen (LS) bestehen, die je parallel mehrere eine Gruppe (GUT) bildende Endschaltungseinheiten (UT) bedienen, und wobei jede Gruppe (GUT) über mindestens eine Verbindung (LX) mit jeder Ebene (RX) des zentralen Koppelfelds verbunden ist, dadurch gekennzeichnet, daß jede Ebene synchronisierte Schalter (CX) aufweist, die je einen Markierer (MQ) enthalten und eine einzige Schaltstufe bilden, daß die Schalter parallel an die ankommenden Verbindungen (LE) der Ebene angeschlossen sind und je eine Gruppe von abgehenden Verbindungen (LS) bedienen, daß jeder Schalter modular aufgebaut ist und einen Steuerspeicherschaltkreis (CMC) aufweist, der vom zugeordneten Markierer (MQ) gelenkt wird, und daß mehrere Pufferspeicherschaltkreise (CMT) vorgesehen sind, die quadratische Koppelmatritzen bilden und eingangsseitig an je einem Teil der ankommenden Verbindungen (LE), die von dem Schalter bedient werden, und ausgangsseitig an alle abgehenden Verbindungen (LS) angeschlossen sind.

2. Koppelfeld nach Anspruch 1, dadurch gekennzeichnet, daß der Pufferspeicherschaltkreis (CMT) eine Gruppe von Serien-Parallel-Wandlerschaltkreisen (CSP) enthält, die je einen Teil der ankommenden Verbindungen (LE) bedienen und denen ein Multiplexierschaltkreis (MX2) folgt, der Zugriff zu einem Pufferspeicher (MT) bietet, und daß es eine Demultiplexiereinrichtung mit Registern (R11 bis R14) aufweist, die die Tastproben am Ausgang des Speichers (MT) auf die Eingänge einer Gruppe von Parallel-Serie-Wandlerschaltkreisen (CPS) verteilt, die Zugriff zu den abgehenden Verbindungen (LS) bieten.

3. Koppelfeld nach Anspruch 2, dadurch gekennzeichnet, daß der Pufferspeicher (MT) doppelt in Form zweier Speicher (M1, M2) ausgeführt ist, die dieselben Lese-Adressierschaltkreise und Schreib-Adressierschaltkreise besitzen und gleichzeitig in Betrieb sind, und zwar abwechselnd der eine am Schreiben und der andere am Lesen.

4. Koppelfeld nach Anspruch 1, in dem jeder Markierer (MQ) einen Mikroprozessor (mPC) besitzt, dadurch gekennzeichnet, daß der Steuerspeicherschaltkreis (CMC) einen Speicher (MC) für die Adressierung der Pufferspeicher (M1, M2) des Schalters aufweist und daß Eingangsregister (RE1 bis RE5) und Ausgangsregister (RS1 bis RS3) Zugriff zur Datenschiene (BD) des Mikroprozessors verschaffen und durch Steuersignale (v1 bis v5) ausgewählt werden, die durch Dekodierung der vom Mikroprozessor mPC auf einer Adressenschiene (BA) ausgesandten Signale erhalten werden.

5. Koppelfeld nach Anspruch 1, dadurch gekennzeichnet, daß es in jedem Schalter (CX) Mittel zur Tastprobenentnahme (MX, PRE, PRS) auf den ankommenden (LE) und abgehenden (LS) Multiplexverbind·ingen und Mittel zum Einspeisen von Tastproben (CP1) des Aktivkontrollkodes (ca) aufweist, und daß es zur Kontrolle des korrekten Aufbaus eines bidirektionalen Verbindungswegs zwischen einer rufenden Endschaltung (T1) und einer gerufenen Endschaltung (T2) die folgenden zusammenwirkenden Mittel enthält:

— die Mittel zur Entnahme und Einspeisung (MX, PRE, PRS, CP1),
— Mittel zur Schleifenbildung (BL1, BL2) für die Empfangs- und die Sendewege in jeder der Endschaltungen (T1, T2),
— Mittel zum Vergleich einer in einen Schalter (CX1) eingespeisten Tastprobe mit derselben Tastprobe, die am Eingang desselben Schalters (CX1) nach dem vollständigen Durchlauf des in Höhe der Endschaltungen in Schleife verbundenen Verbindungsweg abgenommen wurde.

6. Koppelfeld nach Anspruch 1, in dem die Endschaltungseinheiten (UT) in Gruppen (GUT) gegliedert sind, die je einer Steuereinheit zugeordnet sind, wobei die Steuereinheit die Gruppe und die Verbindungen betreut, die zum zentralen Koppelfeld führen und der Aufbau einer Verbindung zwischen zwei Endschaltungen (T1, T2) aufgrund eines Dialogs zwischen den Endschaltungseinheiten (UT1, UT2), den Steuereinheiten (UC1, UC2), die diese Endschaltungseinheiten betreuen, und den Markierern (MQ1, MQ2) der Schalter (CX1, CX2) erfolgt, die von den Steuereinheiten für den Aufbau der Sprechverbindungen zwischen den beiden Endschaltungen ausgewählt worden sind, dadurch gekennzeichnet, daß die Schleifenbildung der Verbindungen und die Überprüfung durch Nachrichtenaustausch auf Verbindungen zwischen einer ersten Steuereinheit (UC1) und der Endschaltungseinheit des Rufenden (UT1), zwischen der ersten Steuereinheit (UC1) und einem Markierer (MQ1) eines ersten Schalters (CX1), zwischen einer zweiten Steuereinheit (UC2) und der Endschaltungseinheit des Gerufenen (UT2), zwischen der zweiten Steuereinheit (UC2) und einem Markierer (MQ2) eines zweiten Schalters (CX2) und zwischen den Steuereinheiten (UC1, UC2) erfolgt.

**Claims**

1. A digital switching network comprising a control assembly of the distributed structure type in an exchange device having a central switching network, the network being divided into a plurality of independent planes (RX) to which terminal units (UT) arranged in groups (GUT) are connected via multiplex links (CX) composed of inlet (LE) and outlet links (LS), these links serving each parallelly several terminal units (UT) constituting one group (GUT), each group being connected via at least one link to each plane (RX) of the central network, characterized in that each plane comprises synchronized switches (CX) which are each provided with a marker (MQ) and constitute a unique switching stage, the switches being parallelly connected to the inlet links (LE) of the plane and each serving a group of outlet links (LS), each switch being a modular switch and comprising a control memory circuit (CMC) controlled by the associated marker (MQ), and a plurality of buffer memory circuits (CMT) constituting square switching matrices, each one being connected by its inputs to a portion of the inlet links (LE) served by the switch, and at the outlet side to all of the outlet links (LS).

2. A switching network according to claim 1, characterized in that the buffer memory circuit (CMT) comprises a group of series-parallel-conversion circuits (CSP) each serving a portion of the inlet links (LE), these conversion circuits being followed by a multiplexer circuit (MX2) giving access to a buffer memory (MT), and that it comprises a demultiplexer device having registers (R11 to R 14) for distributing the samples from the memory (MT) outlet to the inlets of a group of parallel-series conversion circuits (CPS) giving access to the outlet links (LS).

3. A switching network according to claim 2, characterized in that the buffer memory (MT) is doubled into two memories (M1, M2) sharing the same read addressing circuit and the same write addressing circuit and being simultaneously and alternately used one for reading and the other for writing.

4. A switching network according to claim 1, in which each marker (MQ) comprises a microprocessor (mPC), characterized in that the control memory circuit (CMC) comprises a memory (MC) for addressing the buffer memories (M1, M2) of the switch, the input registers (RE1 to RE5) and the output registers (RS1 to RS3) giving access to the data bus (BD) of the microprocessor, these registers being selected by enabling signals (v1 to v5) obtained by decoding the signals sent out by the microprocessor mPC on an address bus (BA).

5. A switching network according to claim 1, characterized in that it comprises in each switch (CX) means for extracting samples (MX, PRE, PRS) from the inlet (LE) and outlet multiplex links (LS), and sample injection means (CP1) of an active control code (ca), and that the following means are provided in association for the check of the correct establishment of a bidirectional connection path between a calling terminal (T1) and a called terminal (T2):

— said means for extracting and injecting samples (MX, PRE, PRS, CP1),
— looping means (BL1, BL2) for looping the receive and send paths in each one of said terminals (T1, T2),
— means for comparing a sample which has been injected into a switch (CX1) with the same sample as extracted from the input of this very switch (CX1) after it has followed the entire connection path which is looped at the terminals.

6. A switching network according to claim 1, in which the terminal units (UT) are organized in groups (GUT), each one associated with a control unit for controlling the group and the links which connect the group to the central switching network, the establishment of a switch path between two terminals (T1, T2) being obtained by exchanging messages between the units of terminals (UT1, UT2), the control units (UC1, UC2) which manage these terminal units, and the markers (MQ1, MQ2) of the switches (CX1, CX2) selected by the control units for establishing the conversation paths between the two terminals, characterized in that the looping of the links and the check are realized by message exchange on links between a first control unit (UC1) and the unit of terminals of the calling subscriber (UT1), between said first control unit (UT1) and a marker (MQ1) of a first switch (CX1), between a second control unit (UC2) and the unit of terminals of the called subscriber (UT2), between said second control unit (UC2) and a marker (MQ2) of a second switch (CX2) and between said control units (UC1, UC2).

FIG.1

# FIG. 2

# FIG. 3

FIG.4

FIG.5

# FIG.6A

FIG.6B

FIG.7

FIG.8

0 062 295

# FIG. 9